(19) Europäisches Patentamt / European Patent Office / Office européen des brevets

(11) **EP 2 373 477 B1**

(12) **EUROPEAN PATENT SPECIFICATION**

(45) Date of publication and mention
of the grant of the patent:
**20.07.2016 Bulletin 2016/29**

(51) Int Cl.:
***B29C 45/14*** *(2006.01)*     ***B29D 11/00*** *(2006.01)*
***B29C 37/00*** *(2006.01)*     ***B29L 11/00*** *(2006.01)*

(21) Application number: **09793405.3**

(22) Date of filing: **15.12.2009**

(86) International application number:
**PCT/US2009/067974**

(87) International publication number:
**WO 2010/080382 (15.07.2010 Gazette 2010/28)**

(54) **METHOD OF MAKING AN INJECTION MOLDED OPHTHALMIC LENS MOLD AND SUCH MOLD**

VERFAHREN ZUR HERSTELLUNG EINER SPRITZGEGOSSENEN FORM FÜR OPHTHALMISCHE LINSEN UND EINE SOLCHE FORM

PROCÉDÉ DESTINÉ À FABRIQUER UN MOULE POUR LENTILLE OPHTALMIQUE MOULÉE PAR INJECTION ET UN TEL MOULE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.12.2008 US 138610 P**

(43) Date of publication of application:
**12.10.2011 Bulletin 2011/41**

(73) Proprietor: **Novartis AG**
**4056 Basel (CH)**

(72) Inventors:
• **TOLLEFSON, Norris, M.**
**Cumming**
**Georgia 30041 (US)**
• **LIU, Alice, Weimin**
**Alpharetta**
**Georgia 30022 (US)**

(74) Representative: **Bohest AG**
**Holbeinstrasse 36-38**
**4051 Basel (CH)**

(56) References cited:
**EP-A2- 0 985 520**     **WO-A1-00/76738**
**US-A- 4 540 532**     **US-A1- 2006 146 278**
**US-A1- 2008 251 973**

**Description**

The present invention is directed to an improved ophthalmic lens mold, in particular an improved contact lens mold, as well as to a method for injection molding the same.

BACKGROUND OF THE INVENTION

Ophthalmic lenses, in particular contact lenses, which it is intended to produce economically in large numbers, are preferably produced by the so-called mold or full-mold process (also referred to as double sided mold process). In this process, the lenses are produced in their final shape between two mold halves, so that neither subsequent machining of the surfaces of the lenses nor machining of the edge is necessary. Mold processes are described, for example in WO-A-87/04390, EP-A-0367513 or in US 5,894,002.

In the known molding processes, the geometry of the contact lens to be produced is defined by the mold cavity. The edge of the contact lens is likewise formed by the mold, which usually consists of two mold halves. The geometry of the edge is defined by the contour of the two mold halves in the region in which they make contact with each other or by the spatial limitation of the UV light used for polymerization and/or cross-linking the lens forming material.

In order to produce a contact lens, usually a specific amount of a flowable lens forming material is introduced into the female mold half in a first step. The mold is then closed by putting the male mold half into place. The subsequent polymerization and/or cross-linking of the lens forming material is carried out by means of irradiation with UV light and/or by heating. In the process, both the lens forming material in the mold cavity and the excess material in the overflow are hardened. In order to obtain fault-free separation of the contact lens from the excess material, good sealing or expulsion of the excess material should be achieved in the region in which the two mold halves make contact with each other or which defines the spatial limitation of the UV light used for polymerization and/or cross-linking the lens forming material.

After the lens if formed, the mold is disassembled and the lens removed. Additional processing steps, such as sterilization, hydration, inspection, and surface treatment may finally be performed on the lens before packaging.

The materials used for the molds in the above described processes are preferably thermoplastic organic polymers, more preferably polyolefins, such as polypropylene or polyethylene. The molds are usually produced by injection molding and are generally single-use. The reason for this is, inter alias, that the molds may to a certain extent be irreversibly deformed during the sealing of the mold, may be contaminated by the excess material, or may be damaged when the mold halves are separated and the lens is removed.

As the critical surface of the mold is the mold surface forming the optical surface of the lens (i.e. the lens forming area), the mold materials in the known processes are inherently limited to materials that are suitable for injection molding. However, many materials desirable for forming a high quality optical surface are not suitable for injection molding.

U.S. Pat. No. 4,640,489 to Larsen and EP-B-0687550 disclose that molds for soft contact lenses can be made from any thermoplastic material which is suitable for mass production and can be molded to an optical quality surface and with mechanical properties which will allow the mold to maintain its critical dimensions under the process conditions employed in the process. Since polyethylene and polypropylene partly crystallize during cooling from the melt, there is a relatively large shrinkage leading to dimensional changes which are difficult to control. It is therefore disclosed in U.S. Pat. No. 4,640,489 and EP-B-0687550 to use polystyrene which does not crystallize, has low shrinkage, and can be injection molded at relatively low temperature to surfaces of optical quality.

EP-B-0687550 further discloses a process wherein, after injection molding, the mold is transferred to a low oxygen environment for degassing to improve automated manufacturing of soft contact lenses, in particular to improve optical surface quality. According to EP-B-0687550 a key parameter in controlling oxygen levels at the mold interface is the diffusivity of oxygen into and from the mold surface in response to ambient conditions, and thereafter to and into the lens forming reactive monomer composition.

EP-B-0686486 discloses a typical injection molding apparatus and process for manufacturing mold halves and mold assemblies for making contact lenses. See in particular sections [0043] to [0060] of EP-B-0686486 as well as Figure 5 of EP-B-0686486.

EP-A-0985520 discloses a mold assembly for forming ophthalmic lenses and a method for producing an ophthalmic lens using the mold assembly, wherein a relatively thick (0.1 mm to 1 mm, e.g. 0.5 mm) thermoplastic film, such as polypropylene or polyethylene, covers the convex surface of an injection molded body portion of the mold.

US 4 540 532 A discloses the preamble of claim 1.

There exists a need in the art for improved molds for molding ophthalmic lenses that allow fast and economical processing of the molds and provide consistently superior qualities in the molded lenses, which overcome the inherent limitations of the materials and processes disclosed in the prior art.

Accordingly, it is an object of the present invention to provide an improved ophthalmic lens mold, in particular an improved contact lens mold.

More particularly, it is an object of the present invention to provide an injection molded ophthalmic lens mold, in particular a contact lens mold, with an improved mold cavity forming the optical surface of said ophthalmic lens, in particular contact lens.

Further, it is an object of the present invention to provide an improved method for making an ophthalmic lens mold, in particular a contact lens mold.

## SUMMARY OF THE INVENTION

The invention provides an ophthalmic lens mold according to claim 1.

Regarding the film or sheet material(s) forming the optical surfaces, the film or sheet materials may be either substantially the same materials or may be different from one another, and may desirably be polyvinylidene dichloride. At least one of the first and second mold halves may include an annular collar that, upon alignment the first and and second mold half, may include an annular collar that, upon alignment of the first and second mold half, receives the other mold half and aligns the optical surface of the other mold half with respect to the optical surface of the one of the first mold half and the second mold half so that a mold cavity is formed between the front sides of the mold halves. A lens forming material then placed in the mold cavity forms an ophthalmic lens such that the optical surfaces form respective opposing optical surfaces of the lens.

The invention also provides a method of forming an ophthalmic lens mold according to claim 7.

Also provided is a method for making an ophthalmic lens including the steps of providing a first mold half according to the invention, where the first mold half is concave; dosing a lens forming material into the first mold half; providing a second, convex mold half according to the invention; aligning the first and second mold halves; closing the mold comprising first and second mold halves to form a mold cavity; curing the lens forming material in the mold cavity; opening the mold; and removing the formed lens from either the first or second mold half.

A full and enabling disclosure of the present invention, including the best mode thereof, directed to one of ordinary skill in the art, is set forth in the specification, which makes reference to the appended drawings.

## BRIEF DESCRIPTION OF THE DRAWINGS

Figure 1 is a cross-sectional view of a base curve (male) mold half;

Figure 2 is a cross-sectional view of a front curve (female) mold half;

Figure 3 is a cross-sectional view of the mold halves of Figures 1 and 2 operatively engaged.

## DEFINITIONS

A mold half is a part of a mold assembly for forming an ophthalmic lens, in particular a contact lens, preferably in the so-called double sided mold process. The mold half comprises a lens forming area, wherein in general the lens forming area for a male mold half has a convex shape and the lens forming area for a female mold half has a concave shape. When assembled to a mold assembly, two mold halves form a lens shaped mold cavity between the male and female lens forming area.

The optical surface of a mold or mold half generally is the surface of the lens forming area of the male or convex mold half as well as the lens forming area of the female or concave mold half. The optical surface may further comprise the region in which the mold halves make contact for forming the edge of the lens.

The body generally comprises all areas which are not optical surfaces. In particular, the body is providing the overall shape of the mold and the required mechanical stability. In one aspect, the body provides the mold cavity for forming the lens and, in another aspect, the mold features required for tooling and handling, such as mold fixation and positioning for dosing, mold alignment and closing, mold transport, mold opening and mold release (i.e. lens release, respectively). The body in particular includes the front side (other than that portion comprising the optical surface) as well as the back side of the mold.

A film or sheet material useful in the invention may be any substance capable of forming a thin layer upon the bulk mold material (i.e., upon the main body of the mold half) to provide the optical surface of the mold half having properties differing from the bulk mold material forming the body. A film or sheet material is generally made from polymeric material, but may also include or be made from other materials, for example inorganic or ceramic materials which may be applied by techniques such as vapor deposition. The film or sheet material should have a smooth surface, sufficient mechanical stability, be inert to the reactions of the lens forming material, have a limited adhesion to the formed lens, and preferably have a high UV transmittance as well as a high resistance to UV irradiation. The thickness of the film or sheet may vary according to the desired use and physical and chemical characteristics of that material, but s from about 10 microns to about 70 microns.

The term optical quality used to describe certain of the concave and convex surfaces of the mold halves, is intended to mean that the surface is smooth enough that when a polymerizable monomeric or prepolymeric mixture of materials is polymerized and/or crosslinked, while in contact with that surface, into a product having the shape and (upon hydration, if necessary) dimensions, refractive properties and water content of a ready-to-wear ophthalmic lens, the ophthalmic lens can be worn in the eye without causing irritation or damage due to surface irregularities on the lens. When an ophthalmic lens is said as a whole to be of optical quality, it has that degree of surface smoothness and contour precision and also is sufficiently free of internal defects to provide the desired refractive correction without distortion. Known analytical techniques, such as

interferometry, can be employed to confirm the smoothness and contour precision of the surfaces.

The term "ion permeability" as related to a lens correlates with both the lonoflux Diffusion Coefficient and the lonoton Ion Permeability Coefficient. It is known that on-eye movement of the lens is required to ensure good tear exchange, and ultimately, to help ensure good corneal health. Ion permeability is one of the predictors of on-eye movement, because the permeability of ions is believed to be directly proportional to the permeability of water.

The lonoflux Diffusion Coefficient, D, is determined by applying Fick's law as follows:

$$D = - n' / (A \times dc/dx)$$

where n' = rate of ion transport [mol/min]
A = area of lens exposed [mm$^2$]
D = lonoflux Diffusion Coefficient [mm$^2$/min]
dc = concentration difference [mol/L]
dx = thickness of lens [mm]

The lonoton Ion Permeability Coefficient, P, is then determined in accordance with the following equation:

$$\ln( 1 - 2C(t)/C(0) ) = -2APt / Vd$$

where:

C(t) = concentration of sodium ions at time t in the receiving cell

C(0) = initial concentration of sodium ions in donor cell

A = membrane area, i.e., lens area exposed to cells

V = volume of cell compartment (3.0 ml)

d = average lens thickness in the area exposed

P = permeability coefficient

An lonoflux Diffusion Coefficient, D, of greater than about $1.5 \times 10^{-6}$ mm$^2$/min is preferred, while greater than about $2.6 \times 10^{-6}$ mm$^2$/min is more preferred and greater than about $6.4 \times 10^{-6}$ mm$^2$/min is most preferred.

Reference will now be made in detail to presently preferred embodiments of the invention, one or more examples of which are illustrated in the accompanying drawings.

DETAILED DESCRIPTION OF THE INVENTION

It is known, for example from EP-B-0687550, that oxygen, when present in sufficient quantities during the lens forming reaction, can change the fundamental characteristics of the final ophthalmic lens, in particular contact lens.

An oxygen barrier between the lens mold and the lens forming material may be desired to exclude oxygen from the lens forming material and may minimize the influence of oxygen on the curing of the lens forming material. However, oxygen barrier materials, such as polyvinylidene dichloride (PVDC), may not be cost effective materials for forming the entire lens mold structure and/or may not be readily injection moldable materials suitable to form lens molds.

Other contemplated desired surface properties of a lens mold are for example hydrophilic or hydrophobic characteristics, specific surface energy characteristics that promote or inhibit wettability or promote or inhibit lens material adhesion, specific chemical interactions to promote or inhibit transmission of various materials, chemical resistance or inertness characteristics.

It has now surprisingly been found, that insert molding (or over-molding) may be used to apply film or sheet materials with desired surface properties in injection molding for ophthalmic lens molds, in particular contact lens molds. The film or sheet material produces a surface on the lens mold, in particular in the area of the optical surface, with properties which are substantially different from the bulk material forming the body of the mold.

In the invention, it has surprisingly been found, that insert molding (or over-molding) of particular film or sheet materials is suitable for manufacturing ophthalmic lens molds, in particular contact lens molds, with a surface having optical quality as well as other desired surface properties.

Requirements for the film or sheet depend on the manufacturing process for the molded article and/or the final desired properties for the molded article. In the automated manufacture of ophthalmic lenses, in particular contact lenses, using plastic or polymeric molds and polymerizing and/or cross-linking the lens forming material with UV irradiation, the useful properties for the film or sheet include characteristics such as:

High UV transmittance at least on the mold half side through which the UV radiation is applied. For example UV transmittance for a film or sheet with a thickness of 12 $\mu$m is 70% or higher, preferably 80% or higher, more preferably 85% or higher;

Surface smoothness sufficient to not impair the optical surface of the lens forming area and the formed ophthalmic lens, respectively. For example the roughness of the surface for a film or sheet with a thickness of 12 $\mu$m is 25 nm or less, preferably 20 nm or less and more preferably 15 nm or less, most preferably 10 nm or less;

Inertness to the reactions of the lens forming material to not impair the polymerization and/or cross-linking of the lens forming material;

Resistance to the UV irradiation at the wavelengths and intensities applied for polymerization and/or cross-linking of the lens forming material;

Limited adhesion to the formed lens after polymerization and/or cross-linking of the lens forming material;

Mechanical stability to the forces exerted through the overmolding process, mold opening and mold release;

Pliability such that it is capable of being conformed into the molding cavity such that it takes the shape of the mold half onto which it is being overmolded; and Capable of clinging or otherwise adhering to the bulk mold-forming polymer.

Suitable materials for the film or sheet are materials capable of forming a thin conforming surface for the optical surfaces of the mold(s). For example many polymeric materials, such as vinylidene chloride polymers, in particular polyvinylidene dichloride (PVDC), and alpha-olefins, such as polyethylene (PE), polypropylene (PP), low density polyethylene (LDPE) and linear low density polyethylene (LLDPE), olefinic copolymers including cyclo-olefinic copolymers, polyesters such as for example polyethylene terephthalate, polyamides, and fluorinated polyethylenes such as, for example, polytetrafluorethylene (PTFE) may be usefully employed. Other materials which may be useful for the film or sheet include thin metal films, metallized polymer films, for example such as metallized polyester films of polyethylene terephthalate, or the like.

The film or sheet materials to be used may further be subject to treatment or modification processes, e.g. by plasma, by chemical vapor deposition, by corona ionization or by flame ionization, to further alter surface properties according to desired characteristics. In addition, the film or sheet materials to be used may desirably be pre-heated prior to overmolding to improve conformability and/or to improve adherence to the bulk mold half piece.

A process for injection molding an ophthalmic lens mold according to the present invention comprises the following steps:

In a first step, a film or sheet is placed between the open platens of the injection molding apparatus. It may be desirable to place a sufficient amount of tension on the film material or to otherwise maintain its position between the open platens prior to closing, so as to assist the film's ability to conform successfully to the optical surfaces of the mold tooling in the injection molding apparatus. Sufficient tension could be applied by means known in the art, such as by a gripper apparatus (tenter-frame type, clamps, etc.) holding an edge or the edges of the film in position on or over the molding platen, roll-to-roll unwinds, and the like. Alternatively, maintaining proper film positioning and assisting the film's conformance could be aided by other means known in the art such as by the application of a vacuum, blown air, etc.

In a second step, the platens of the injection molding apparatus are closed and in a third step, molten material forming the body of the mold is injected. The injection molded material forces the film or sheet into the contours of the injection molding cavity, substantially conforming to the cavity and thereby replicating the cavity design. The resulting ophthalmic lens mold half thus produced has surface characteristics of the film material, and body characteristics of the bulk material. Those skilled in the art will recognize there may be other desirable means for providing the film surface for the optical surface onto the body of the lens mold bulk material, for example as by spraying the desired film material in liquid, vapor or particulate form into the cavity of the mold tool optical surface prior to injection molding the bulk material, or by other means as may be known in the art.

Depending on the preferred final lens product or lens characteristics, it may be desirable to have only one of the front-curve ("female") mold half or back-curve ("male") mold half having the film or sheet material producing the optical surface of the mold. For other desired lens product or lens characteristics, it may be desirable to have both of the front-curve ("female") mold half or back-curve ("male") mold half having the film or sheet material producing the optical surface of the mold, and in such instances the film or sheet material producing the optical surface may be substantially the same material for both of the front-curve and back-curve optical surfaces, or may be desirable to have differing film or sheet materials for the two mold halves. Furthermore, it is not necessarily required that the main body portion of the front-curve mold half be made from the same material of the back-curve mold half. However, generally speaking, a given mold half will be formed with differing materials for the bulk or body material and the film or sheet material for the optical surface.

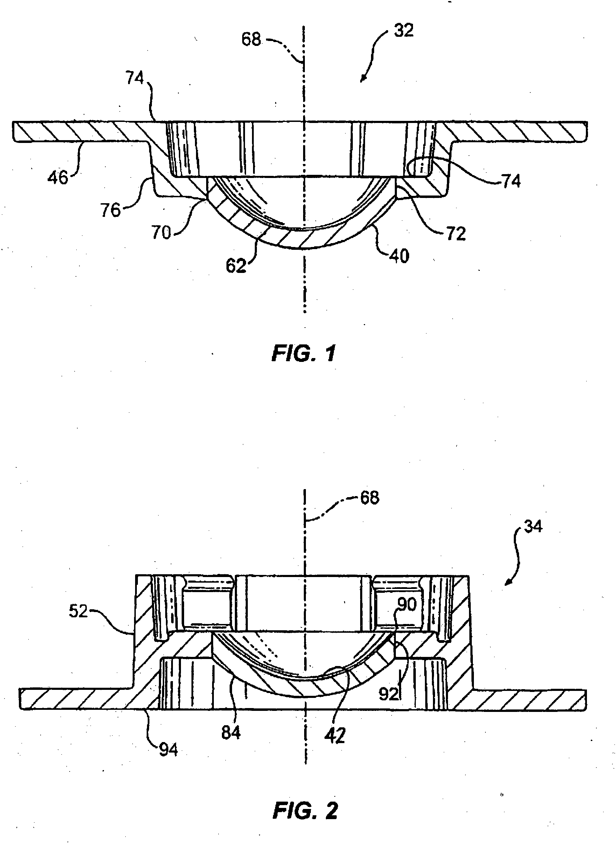

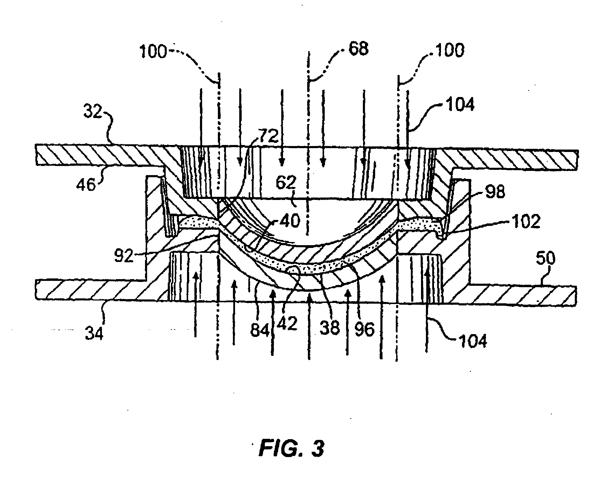

Referring to Figures 1 to 3, a contact lens mold includes a back curve mold half 32 and a front curve mold half 34 defining respective optical surfaces 40 and 42. As mentioned, depending on the desired use, either or both of optical surfaces 40 and 42 may be formed of or by the film or sheet materials. Mold halves 32 and 34 are brought together, as shown in Figure 3, so that a mold cavity 38 is defined between optical surfaces 40 and 42 into which a lens forming material is deposited to form a contact lens. While contact lens surfaces typically define areas such as, for example, the "optical" zone and "lenticular" zone, the entire lens front curve surface and the entire lens base curve surface are referred to herein as optical surfaces which are formed by the optical surfaces of the contact lens mold. Thus, the lens mold's optical surfaces as referred to herein may include those surfaces that form contact lens optical surfaces, including the optical and lenticular zones. As should be understood by those skilled in this art, optical surfaces 40 and 42 may define spherical, toric and off-centered or decentered optical zones, as well as ballast and slab-off zones. Where a toric zone and a ballast zone are defined by different optical surfaces, mold halves 32 and 34 may be relatively rotated about axis 68 with respect to each other to achieve a desired angular offset between the toric zone and the ballast. The technique may also be applied to mold halves for making multifocal lenses.

Base curve mold half 32 has a front side 46 and an optical surface 40. Front curve mold half 34 has a front side 50 and an optical surface 42. Mold half 34 further will generally include an annular collar 52 that receives a complimentary annular collar of mold half 32, so that when the mold halves are assembled in their operative position, the optical surface 40 is centered with respect to optical surface 42.

As described, mold halves 32 and 34 may be formed by an injection molding process. Because optical surfaces 40 and 42 are critical surfaces, it is preferred that the molten material be provided in an indirect fashion rather than provided directly onto those surfaces. Molten material in the illustrated embodiment is therefore injected into the mold cavity through a gate radially offset from optical surfaces 40 and 42 with respect to an axis 68. The mold cavity path from the injection point to center forms the gate.

Optical surface 42 further defines an edge 90 centered about axis 68, which extends to form a boundary 92 parallel to axis 68 and including edge 90. A second section 94 meets and completely surrounds boundary 92. Optical surface 40 defines a boundary 72 as well parallel to axis 68.

Referring to Figure 3, when mold halves 32 and 34 are brought together, and are aligned with respect to each other, the mold cavity 38 is formed between front or convex side 46 of mold half 32 and front or concave side 50 of mold half 34. When in use, prior to assembly of the mold halves, a lens forming material is deposited into the concave optical surface 42.

When the mold halves are assembled, the convex optical surface 40 engages the lens forming material which is in the concave optical surface 42 (the optical surfaces 40 and 42 formed of or by the film or sheet material as mentioned above) so that the lens forming material fills the portion 96 of mold cavity 38 between the optical surfaces. Excess lens forming material is pushed radially outward into an overflow 98 extending radially outward from a boundary 100 (usually defining the edge of the lens) that includes boundaries 92 and 72. The overflow 98 includes an annular reservoir 102 to receive the excess lens forming material. While the thickness of center sections 62 and 84 may vary on the order of microns across their respective cross-sections, each preferably defines a generally uniform thickness above and below their respective optical surfaces.

EXAMPLES

Soft hydrophilic Sample contact lenses having a nominal power of -1.00 Diopter were made from lotrafilcon B silicone hydrogel material substantially in accordance with the invention, using polypropylene as the bulk mold material (homopolymer polypropylene designated P4C5N-046 and available from Flint Hills Resources, LP, Wichita, Kansas) which was injection-overmolded with polyvinylidene dichloride film. In addition, Control lenses were prepared using polypropylene molds without the polyvinylidene dichloride film overmolding.

The polyvinylidene dichloride film used to make the film-overmolded mold halves was SARAN™ 18 (distributed by Filcon Company of Clare, MI (manufactured by The Dow Chemical Company, Midland, MI)) having a nominal thickness of 25 $\mu$m (1 mil = 0.001 inch). To produce the film-overmolded mold halves, the polyvinylidene dichloride film was cut into approximately 152 mm (6 inch) by 254 mm (10 inch) pieces from a roll of the film. Each of the cut pieces was then placed across a surface of the mold tool in the injection molding apparatus. Thereafter, the injection molding cycle was conducted as typical. When the pieces were removed from the molding apparatus, the result was over-molded mold half pieces held together in a "matrix" of the polyvinylidene dichloride film extending between the pieces.

Both front curve mold halves and base curve mold halves were produced. For most of the pieces, the polyvinylidene dichloride film was snugly attached or adhered to the bulk polypropylene. However, in a few instances the film was wrinkled, which may have occurred due to insufficient tension on the hand-sheet sized film pieces as the molding apparatus was closed. In a production environment, sufficient tension could be applied by means known in the art, such as by a gripper apparatus (tenter-frame type or other) holding the edges of the film outside the boundaries of the molding platen, roll-to-roll unwinds, and the like, or the film's conformance could be aided by other means known in the art such as by the application of a vacuum, blown air, etc.

Before lens casting, the mold halves were cut free from the surrounding polyvinylidene dichloride film matrix. The Sample and Control lenses were cast manually in a pilot laboratory approximately 4 hours after the mold halves were prepared. The mold halves to cast both the Sample and Control lenses were exposed to ambient atmosphere during this period and were not treated in any way to remove oxygen prior to lens casting.

All lenses were cast manually from lotrafilcon B in a pilot lab. Lotrafilcon B is a well-known ophthalmic lens material which is a copolymerization product of a mixed polysiloxane/perfluoroalkyl polyether crosslinker, tris-(trimethylsiloxysilyl) propylvinyl carbamate (TRIS) and N,N-dimethylacrylamide (DMA). The lens forming materials were placed into the female or front curve mold halves and the male or back curve mold halves were engaged to close the mold halves into mold assemblies. The mold assemblies were exposed to ultraviolet light to cure the lens forming material. Following curing, the mold assemblies were deblocked with hot water and the lenses were removed from the mold assemblies.

Lenses were divided into subgroups for ion permeability testing. Ion permeability of a lens may desirably be measured according to procedures described in U.S. Pat. No. 5,760,100 to Nicolson et al. The values of ion permeability reported are relative ionoflux diffusion coefficients (D/Dref) in reference to a lens material, Alsacon, as reference material. Alsacon has an ionoflux diffusion coefficient of 0.314 x $10^{-3}$ mm$^2$/minute. Lenses were tested for ion permeability under the following situations: Sample and Control lenses having had no plasma treatment and Sample and Control lenses having undergone a linear plasma hydrophilizing process, such as is described substantially in accordance with the teachings of U.S. Pat. No. 6,881,269 to Matsuzawa et al. The average results are shown in TABLE I below.

TABLE I. Ion Permeability

| Lens Treatment | N | Ion Permeability (relative) | |
|---|---|---|---|
| | | Control | Sample |
| None | 3 | 3.5 (9)* | 3.9 (1) |
| Plasm | 18 | 1.1 (3) | 3.9 (2) |
| * Number in parenthesis indicates 1-σ standard deviation in last place. | | | |

As can be seen from TABLE I, both the Control and Sample lenses had good ion permeability results prior to plasma treatment. However, while the Sample lenses maintained substantially equivalent ion permeability following plasma treatment, the Control lenses had significantly lower ion permeability following plasma treatment. As mentioned above, good ion permeability is one of the predictors of sufficient on-eye movement, which correlates to good tear exchange, and ultimately, corneal health.

In addition, Control and Sample lenses which had been exposed to linear plasma treatment were characterized by other properties to determine whether lenses made using the film-overmolded mold halves had significant differences in physical properties. Lens diameters, center thicknesses ("CT"), base curve equivalents ("BCE"), modulus and percent water (hydrated lenses) were compared. The average results are shown in TABLE II below, which clearly indicate that lens curing and forming in polyvinylidene dichloride film-overmolded mold halves did not significantly affect these properties. However, most of the Control lenses and the Sample lenses on visual inspection showed poor optical quality. Because this affected both groups (Control and Sample) essentially equally, this result was attributed to having been cast and cured manually in the pilot laboratory.

TABLE II. Lens Physical Characteristics.

| Characteristic | N | Control | Sample |
|---|---|---|---|
| Diameter (mm) | 10 | 14.30 (5)* | 14.25 (5) |
| CT (mm) | 10 | 0.071 (8) | 0.064 (4) |
| BCE (mm) | 10 | 8.66 (5) | 8.77 (9) |
| Diopter | 10 | -1.08 (15) | -1.57 (17) |
| % Water | 2x6** | 32.5 | 30.6 |
| Modulus (MPa) | 5 | 0.92 (5) | 0.94 (8) |
| * Number in parenthesis indicates 1-$\sigma$ standard deviation in last place. ** Batch of 6 lenses; dry weight vs. hydrated weight. | | | |

In addition to overmolding polypropylene mold halves with polyvinylidene dichloride film, an attempt was made during this same lens-making trial to overmold polypropylene bulk mold halves using polyethylene terephthalate (PET) film and with a polytetrafluoroethylene (PTFE) film. The polyethylene terephthalate film was Dupont 48 LBT (Dupont Teijin Films U.S., Hopewell, VA) having a nominal thickness of 13 $\mu$m (0.5 mil = 0.0005 inches). The polytetrafluoroethylene film was FEP/A (Welch Fluorocarbon Inc., Dover, NH) having a nominal thickness of 127 $\mu$m (5 mil = 0.005 inches). However, no lenses were cast using these over-molded mold halves during this lens-making trial, due to the results as described below.

The 48 LBT polyester film used in the attempted overmolding was very thin, and in addition was not pliable enough to stretch and conform well to the mold cavity. That is to say, the film would not conform the mold cavity well and the overmolded mold half pieces often exhibited film wrinkles or bubbles between the film and the lens-casting region of the mold half, particularly for the front curve (female) mold half. However, it is believed that other polyester film grades (having differing thicknesses and/or physical properties) are useful in practicing the invention.

The FEP/A polytetrafluoroethylene film used in the attempted overmolding was found to be too thick and inflexible to be readily formable at the temperatures and pressures used in the standard injection molding apparatus. Due to its thickness and relative inflexibility, it did not conform to cavity well and would not adhere to the bulk polypropylene mold half pieces. Therefore, the resulting overmolded pieces were more like a thermoformed part, with the structural details of the mold half pieces being blurred. However, it is believed that other polytetrafluoroethylene film grades and/or other fluorinated polymer film grades (having differing thicknesses and/or physical properties), are still useful in practicing the invention. In addition, the grade of PTFE film tested may well still be useful under other processing circumstances, such as with a different bulk polymer for the mold half pieces, differing pressures and/or temperatures used for the injection/overmolding process, etc.

Various other film or sheet materials were tested in early prototyping overmolding-only (i.e., overmolding but not lens making) trials. In each case, the film material was overmolded to the above-mentioned P4C5N-046 polypropylene bulk material to form the film-overmolded mold half piece. Polyvinylidene dichloride films designated Barrialon UB 15 and Barrialon UB 25 (nominal thicknesses respectively 15 $\mu$m and 46 $\mu$m (0.0006 and 0.0018 inches), both available from Phoenix Films, Clearwater, FL) were successfully overmolded to the bulk polypropylene material to produce mold halves having optical surfaces formed of the PVDC film. By successfully overmolded, what is meant is that the overmolded film conformed well to the bulk polypropylene material to create the film optical surfaces. A polyvinylidene dichloride/polyethylene co-extruded film designated HB CX (nominal thickness 43 $\mu$m [0.00017 inches]) and a metallized polyethylene terephthalate film designated FB-A (nominal thickness 4.3 $\mu$m (0.00017 inches]) (both available from Phoenix Films, Clearwater, FL) were also successfully overmolded to the bulk polypropylene material to produce mold halves having optical surfaces formed of the respective films. A polyethylene-based cling/stretch film designated ADC11520V having a nominal thickness of 38 $\mu$m (0.00115 inches) (available from Atlantis Plastics, Atlanta, GA) was also successfully overmolded to the bulk polypropylene material to produce mold halves having optical surfaces formed of the polyethylene-based film. And a nylon-6/MXD-6 co-extruded polyamide film designated PA6-MXD6 and having a nominal thickness of 15 μm (0.0006 inches) (available from Mitsubishi Gas Chemical America, New York, NY) was also successfully overmolded to the bulk polypropylene material to produce mold halves having optical surfaces formed of the polyamide-based film

Although various embodiments of the invention have been described using specific terms, devices, and methods, such description is for illustrative purposes only.

**Claims**

1. An ophthalmic lens mold, the mold comprising a first mold half (32) having a front side (46) and a back side (74), the front side defining a first optical surface (40); and a second mold half (34) having a front side (50) and a back side (94), the front side defining a second optical surface (42);
   wherein the first and second optical surfaces (40, 42) are formed by a film or sheet material with a thickness from about 10 microns to about 70 microns; and wherein the body of the first and second mold half is formed from an injection moldable material,
   **characterized by**, that the film or sheet material is over-molded with the injection moldable material to form an integrally laminated mold half.

2. The mold of any one of the preceding claims wherein the entire front side (46, 50) surface is formed by the film or sheet material and wherein the body, including the back side (74, 94) is formed by the injection moldable material.

3. The mold of any one of the preceding claims, wherein the injection moldable material is polypropylene or polyethylene.

4. The mold of any one of the preceding claims, wherein the first optical surface (40) is formed by a first film or sheet material and wherein said second optical surface (42) is formed by a second film or sheet material that is different from the first film or sheet material.

5. The mold of any one of the preceding claims, wherein the film or sheet material is polyvinylidene dichloride.

6. The mold of any one of the preceding claims, wherein the first optical surface (40) is convex and wherein the second optical surface (42) is concave.

7. A method of forming an ophthalmic lens mold comprising a first mold half (32) with an optical surface (40) and a second mold half (34) with an optical surface (42), the method comprising the steps of forming the first mold half (32):

   (a) providing a first injection molding cavity;
   (b) providing a first film or sheet material with a thickness from about 10 microns to about 70 microns to cover at least one surface of the injection molding cavity;
   (c) maintaining the first film or sheet material in position upon closing the injection molding cavity;
   (d) injecting a molten injection moldable material to fill the injection molding cavity forcing the first film or sheet material to replicate the contours of the at least one surface of the injection molding cavity;
   (e) cooling or allowing to cool the materials in the injection molding cavity to form the at least first mold half;
   (f) opening the injection molding cavity, and
   (g) removing the ophthalmic lens mold half from the injection molding cavity [.]; and further comprising the steps of forming the second mold half (34):

      (a) providing a second injection molding cavity
      (b) providing a second film or sheet material with a thickness from about 10 microns to about 70 microns to cover at least one surface of the second injection molding cavity;
      (c) maintaining the second film or sheet material in position upon closing the second injection molding cavity;
      (d) injecting a molten injection moldable material to fill the second injection molding cavity forcing the second film or sheet material to replicate the contours of the at least one surface of the second injection molding cavity;
      (e) cooling or allowing to cool the materials in the second injection molding cavity to form the second mold half;
      (f) opening the second injection molding cavity, and
      (g) removing the second mold half from the injection molding cavity,

wherein the film or sheet and the injection moldable material are physically and/or chemically bonded to form an integrally laminated mold half.

8. The method of claim 7, wherein the second film or sheet material is different from the first film or sheet material.

9. The method of claim 7, wherein the second film or sheet material is substantially the same as the first film or sheet material.

**Patentansprüche**

1. Form für eine ophthalmische Linse, welche Form eine erste Formhälfte (32) mit einer Vorderseite (46) und einer Rückseite (74) umfasst, wobei die Vorderseite eine erste optische Oberfläche (40) definiert; und eine zweite Formhälfte (34) mit einer Vorderseite (50) und einer Rückseite (94), wobei die Vorderseite eine zweite optische Oberfläche (42) definiert;
wobei die ersten und zweiten optischen Oberflächen (40, 42) gebildet werden durch ein Film- oder Folienmaterial mit einer Dicke von etwa 10 Mikrometer bis etwa 70 Mikrometer; und wobei der Körper der ersten und zweiten Formhälfte aus einem spritzgrießfähigem Material gebildet ist, **dadurch gekennzeichnet, dass** das Film- oder Folienmaterial überspritzt ist mit dem spritzgießfähigen Material, um eine integral laminierte Formhälfte zu bilden.

2. Form nach einem der vorangehenden Ansprüche, wobei die gesamte Vorderseitenoberfläche (46, 50) gebildet ist aus dem Film- oder Folienmaterial und worin der Körper, einschließlich der Rückseite (74, 94), gebildet ist aus dem spritzgießfähigen Material.

3. Form nach einem der vorangehenden Ansprüche, wobei das spritzgießfähige Material Polypropylen oder Polyethylen ist.

4. Form nach einem der vorangehenden Ansprüche, wobei die erste optische Oberfläche (40) aus einem ersten Film- oder Folienmaterial gebildet ist und wobei die zweite optische Oberfläche (42) aus einem zweiten Film- oder Folienmaterial gebildet ist, das verschieden ist von dem ersten Film- oder Folienmaterial.

5. Form nach einem der vorangehenden Ansprüche, wobei das Film- oder Folienmaterial Polyvinylidendichlorid ist.

6. Form nach einem der voranrgehenden Ansprüche, wobei die erste optische Oberfläche (40) konvex ist und wobei die zweite optische Oberfläche (42) konkav ist.

7. Verfahren zum Herstellen einer opththalmischen Linsenform umfassend eine erste Formhälfte (32) mit einer optischen Oberfläche (40) und eine zweite Formhälfte (34) mit einer optischen Oberfläche (42), wobei das Verfahren das Bilden einer ersten Formhälfte (32) umfasst:

   (a) Bereitstellen eines ersten Spritzguss-Formhohlraums;
   (b) Bereitstellen eines ersten Film- oder Folienmaterials mit einer Dicke von etwa 10 Mikrometer bis etwa 70 Mikrometer, um mindestens eine Oberfläche des Spritzguss-Formhohlraums zu bedecken;
   (c) Halten des ersten Film- oder Folienmaterials in Position beim Schließen des Spritzguss-Formhohlraums;
   (d) Einspritzen eines geschmolzenen Spritzgussmaterials zum Füllen des Spritzguss-Formhohlraums, wodurch das erste Film- oder Folienmaterial dazu gezwungen wird, die Konturen der mindestens einen Oberfläche des Spritzguss-Formhohlraums nachzubilden;
   (e) Kühlen oder Abkühlen lassen der Materialien in dem Spritzguss-Formhohlraum, um die mindestens eine erste Formhälfte zu bilden;
   (f) Öffnen des Spritzguss-Formhohlraums und
   (g) Entnehmen der ophthalmischen Linsenformhälfte aus dem Spritzguss-Formhohlraum;

   und weiterhin umfassend die Schritte des Bildens einer zweiten Formhälfte (34):

   (a) Bereitstellen eines zweiten Spritzguss-Formhohlraums;
   (b) Bereitstellen eines zweiten Film- oder Folienmaterials mit einer Dicke von etwa 10 Mikrometer bis etwa 70 Mikrometer, um mindestens eine Oberfläche des zweiten Spritzguss-Formhohlraums zu bedecken ;
   (c) Halten des zweiten Film- oder Folienmaterials in Position beim Schließen des zweiten Spritzguss-Formhohlraums;

(d) Einspritzen eines geschmolzenen Spritzgussmaterials zum Füllen des zweiten Spritzguss-Formhohlraums, wodurch das zweite Film- oder Folienmaterial dazu gezwungen wird, die Konturen der mindestens einen Oberfläche des zweiten Spritzguss-Formhohlraums nachzubilden;

(e) Kühlen oder Abkühlen lassen der Materialien in dem zweiten Spritzguss-Formhohlraum, um die zweite Formhälfte zu bilden;

(f) Öffnen des zweiten Spritzguss-Formhohlraums und

(g) Entnehmen der zweiten Formhälfte aus dem Spritzguss-Formhohlraum, wobei der Film oder die Folie und das Spritzgussmaterial physikalisch und/oder chemisch verbunden sind, um eine integral laminierte Formhälfte zu bilden.

8. Verfahren nach Anspruch 7, wobei das zweite Film- oder Folienmaterial verschieden von dem ersten Film- oder Folienmaterial ist.

9. Verfahren nach Anspruch 7, wobei das zweite Film- oder Folienmaterial im Wesentlichen das gleiche ist wie das erste Film- oder Folienmaterial.


**Revendications**

1. Moule pour lentille ophtalmique, le moule comprenant une première moitié de moule (32) présentant un côté avant (46) et un côté arrière (74), le côté avant définissant une première surface optique (40) ; et une seconde moitié de moule (34) présentant un côté avant (50) et un côté arrière (94), le côté avant définissant une seconde surface optique (42) ;

dans lequel les première et seconde surfaces optiques (40, 42) sont formées par un matériau de film ou de feuille présentant une épaisseur allant d'environ 10 microns à environ 70 microns ; et dans lequel le corps des première et seconde moitiés de moule est formé à partir d'un matériau moulable par injection, **caractérisé en ce que** le matériau de film ou de feuille est sur-moulé avec le matériau moulable par injection pour former une moitié de moule intégralement laminée.

2. Moule selon l'une quelconque des revendications précédentes, dans lequel l'ensemble de la surface du côté avant (46, 50) est formé par le matériau de film ou de feuille et dans lequel le corps, y compris le côté arrière (74, 94), est formé par le matériau moulable par injection.

3. Moule selon l'une quelconque des revendications précédentes, dans lequel le matériau moulable par injection est du polypropylène ou du polyéthylène.

4. Moule selon l'une quelconque des revendications précédentes, dans lequel la première surface optique (40) est formée par un premier matériau de film ou de feuille et dans lequel ladite seconde surface optique (42) est formée par un second matériau de film ou de feuille qui est différent du premier matériau de film ou de feuille.

5. Moule selon l'une quelconque des revendications précédentes, dans lequel le matériau de film ou de feuille est du dichlorure de polyvinylidène.

6. Moule selon l'une quelconque des revendications précédentes, dans lequel la première surface optique (40) est convexe et dans lequel la seconde surface optique (42) est concave.

7. Procédé de formation d'un moule pour lentille ophtalmique comprenant une première moitié de moule (32) présentant une surface optique (40) et une seconde moitié de moule (34) présentant une surface optique (42), le procédé comprenant les étapes de formation de la première moitié de moule (32) :

(a) fournir une première cavité de moulage par injection ;

(b) fournir un premier matériau de film ou de feuille présentant une épaisseur allant d'environ 10 microns à environ 70 microns pour couvrir au moins une surface de la cavité de moulage par injection ;

(c) maintenir le premier matériau de film ou de feuille en position lors de la fermeture de la cavité de moulage par injection ;

(d) injecter un matériau fondu moulable par injection pour remplir la cavité de moulage par injection forçant le premier matériau de film ou de feuille à répliquer les contours de ladite surface de la cavité de moulage par injection ;

(e) refroidir ou laisser refroidir les matériaux dans la cavité de moulage par injection pour former au moins la première moitié de moule ;

(f) ouvrir la cavité de moulage par injection ; et

(g) retirer la moitié de moule de lentille ophtalmique de la cavité de moulage par injection ;

et comprenant en outre les étapes de formation de la seconde moitié de moule (34) :

(a) fournir une seconde cavité de moulage par injection ;

(b) fournir un second matériau de film ou de feuille présentant une épaisseur allant d'environ 10 microns à environ 70 microns pour couvrir au moins une surface de la seconde cavité de moulage par injection ;

(c) maintenir le second matériau de film ou de feuille en position lors de la fermeture de la seconde cavité de moulage par injection ;

(d) injecter un matériau fondu moulable par injection pour remplir la seconde cavité de moulage par injection en forçant le second matériau de film ou de feuille à répliquer les contours de ladite surface de la seconde cavité de moulage par injection ;

(e) refroidir ou laisser refroidir les matériaux dans la seconde cavité de moulage par injection pour former la seconde moitié de moule ;

(f) ouvrir la seconde cavité de moulage par injection ; et

(g) retirer la seconde moitié de moule de la cavité de moulage par injection,

dans lequel le film ou la feuille et le matériau moulable par injection sont physiquement et/ou chimiquement liés pour former une moitié de moule intégralement laminée.

8. Procédé selon la revendication 7, dans lequel le second matériau de film ou de feuille est différent du premier matériau de film ou de feuille.

9. Procédé selon la revendication 7, dans lequel le second matériau de film ou de feuille est essentiellement le même que le premier matériau de film ou de feuille.

**FIG. 1**

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8704390 A
- EP 0367513 A
- US 5894002 A
- US 4640489 A, Larsen
- EP 0687550 B

- EP 0686486 B
- EP 0985520 A
- US 4540532 A
- US 5760100 A, Nicolson
- US 6881269 B, Matsuzawa